# EUROPÄISCHE PATENTSCHRIFT

(11) **EP 2 611 600 B1**
(45) Veröffentlichungstag und Bekanntmachung des Hinweises auf die Patenterteilung: **16.07.2014**
(21) Anmeldenummer: 11741126.4
(22) Anmeldetag: 05.08.2011
(51) Int. Cl.: B29C 70/64, B29C 43/30, E04F 15/10, E04F 15/16, B29D 99/00, B29C 35/02, B29B 13/08, B29L 31/00, B29L 31/30, B29C 35/08, B29K 9/06

(54) **BODENBELAG UND VERFAHREN ZU DESSEN HERSTELLUNG**
FLOOR COVERING AND METHOD FOR PRODUCING THE SAME
REVÊTEMENT DE SOL ET PROCÉDÉ DE FABRICATION CORRESPONDANT

(30) Priorität: 01.09.2010 DE 102010036121
(43) Veröffentlichungstag der Anmeldung: 10.07.2013
(73) Patentinhaber: Nora Systems GmbH, 69469 Weinheim (DE)
(72) Erfinder: GRUN, Gregor, 66482 Zweibrücken (DE); KRÖGER, Mario, 76646 Bruchsal (DE); RISCHER, Dieter, 69518 Abtsteinach (DE)
(74) Vertreter: Reiser & Partner
(86) Internationale Anmeldenummer: PCT/EP2011/003937
(87) Internationale Veröffentlichungsnummer: WO 2012/028240

(56) Entgegenhaltungen:
- EP-A1- 0 721 834
- EP-A2- 1 884 607
- DE-A1- 19 848 137
- DE-C1- 4 405 589

## Beschreibung

Die Erfindung betrifft einen Bodenbelag, umfassend eine im Wesentlichen bahn- oder plattenförmige Matrix aus einem elastomeren Material, wobei die Matrix mit Partikeln versehen ist.

Ein derartiger Bodenbelag ist aus der DE 198 48 137 B4 bekannt, die einen Bodenbelag gemäß dem Oberbegriff des Anspruchs 1 offenbart. Der dort gezeigte Bodenbelag ist zur Farbgestaltung mit Partikeln versehen, welche auf das zu einer Bahn geformte Basismaterial aufgestreut werden. Die Partikel bestehen dabei aus einem unvulkanisierten Kautschukmaterial. In der nachgeschalteten thermischen Behandlung erfolgt eine Aufweichung der Partikel, so dass diese durch Einwirkung mechanischer Kräfte verformt werden. Dadurch entsteht ein homogener Verbund der Partikel.

Die Verwendung der zuvor beschriebenen unvulkanisierten Kautschukpartikel eignet sich somit insbesondere zum Einfärben eines Bodenbelags. Sie sind jedoch nicht dazu geeignet, dem Bodenbelag ein Muster in vorgegebener Form zu verleihen, weil sich die Partikel im Zuge der nachgeschalteten mechanischen und thermischen Behandlung unregelmäßig verformen. Um einem Bodenbelag ein vorgegebenes Muster zu verleihen, können die Partikel aus einem bereits vulkanisierten Kautschukmaterial bestehen. Diese sind auch in nachgeschalteten mechanischen und thermischen Verfahrensschritten formstabil. Aufgrund der hohen Anforderungen an die Formstabilität während der nachgeschalteten Verfahrensschritte sind jedoch zum einen die Formenvielfalt und zum anderen die Materialauswahl der Partikel beschränkt.

Der Erfindung liegt die Aufgabe zugrunde, einen Bodenbelag mit einfach herstellbaren Partikeln bereitzustellen, der mit einem Muster in vorgegebener Form versehen ist.

Diese Aufgabe wird mit den Merkmalen von Anspruch 1 und 6 gelöst. Auf vorteilhafte Ausgestaltungen nehmen die Unteransprüche Bezug.

Zur Lösung der Aufgabe sind die Partikel aus einem thermoplastischen Elastomer gebildet. Thermoplastische Elastomere (TPE) sind Kunststoffe, die bei Raumtemperatur einem Elastomer vergleichbare Eigenschaften und bei hohen Temperaturen einem Thermoplasten vergleichbare Eigenschaften aufweisen. Dadurch weist ein Gegenstand aus thermoplastischem Elastomer bei Raumtemperatur eine vergleichsweise geringe Härte und ein gummiähnliches Rückstellvermögen auf. Bei hohen Temperaturen lösen sich die Vernetzungspunkte des thermoplastischen Elastomers reversibel, so dass eine Verarbeitung des Werkstoffs mit den in der Thermoplastindustrie üblichen Verfahren, beispielsweise mittels Spritzgießen oder Extrusion möglich ist, wobei sich die elastomeren Eigenschaften nach dem Auskühlen wieder einstellen. Thermoplastische Elastomere sind in einer großen Farbvielfalt und insbesondere auch transparent verfügbar, wobei insbesondere die Verwendung eines transparenten thermoplastischen Elastomers die Herstellung eines teilweise transparenten oder bei Einfärbung der Partikel auch die Herstellung eines teilweise transluzenten Bodenbelags ermöglicht. Dabei ist insbesondere vorteilhaft, dass ein transparentes thermoplastisches Elastomer in einer Härte ausgeführt werden kann, die im Wesentlichen der Härte des vulkanisierten elastomeren Materials der Matrix entspricht. Somit ist es möglich, einen verlegbaren Bodenbelag bereitzustellen, der vollflächig über vergleichbare Eigenschaften verfügt. Ein transparent ausgebildeter vulkanisierbarer elastomerer Werkstoff weist dagegen meist nur eine geringe Härte auf, so dass die Partikel eine geringere Härte aufweisen als das Basismaterial der Matrix, wodurch der Bodenbelag nicht über durchgehend gleichmäßige Eigenschaften verfügen würde.

Erfindungsgemäß sind die Partikel mittels ionisierender Strahlung vorbehandelt. Zu der ionisierenden Strahlung zählt jede Strahlung, die aus Atomen oder Molekülen Elektronen entfernen kann, so dass Ionen oder Molekülreste zurückbleiben. Diese reaktiven Teilchen reagieren bei der Vorbehandlung derart mit den Polymeren des thermoplastischen Elastomers, dass diese zumindest teilweise irreversibel vernetzen. Diese Vernetzung tritt ein, ohne dass dem Material ein Vernetzungs- oder Vulkanisationsmittel zugegeben werden muss. Durch diese wenigstens teilweise Vernetzung sind die Partikel bei Beibehaltung der elastomeren Eigenschaften auch bei Temperatureinwirkung formstabil. Somit behalten die Partikel die vorgegebene Form auch bei mechanischer Belastung und bei Temperatureinwirkung, beispielsweise während einer Vulkanisation der Matrix bei. Somit können Partikel in einer großen vorgebbaren Formenvielfalt hergestellt und der Matrix zugemischt werden. Bei der Vernetzung mittels ionisierender Strahlung ist insbesondere Vorteilhaft, dass diese ohne Einwirkung von Druck oder Temperatur erfolgt, so dass die der Vernetzung zugeführten Partikel während der Bestrahlung ihre Form behalten und nach der Vernetzung Formstabil bleiben.

Die Partikel können zumindest teilweise transparent ausgebildet sein. Insbesondere thermoplastische Elastomere sind in einer großen Farbvielfalt und insbesondere auch transparent verfügbar, wobei insbesondere die Verwendung eines transparenten thermoplastischen Elastomers die Herstellung eines teilweise transparenten oder bei Einfärbung der Partikel auch die Herstellung eines teilweise transluzenten Bodenbelags ermöglicht. Des Weiteren kann der Bodenbelag so ausgeführt werden, dass er durchleuchtbar ist. Dabei ist insbesondere vorteilhaft, dass ein transparentes thermoplastisches Elastomer in einer Härte ausgeführt werden kann, die im Wesentlichen der Härte des vulkanisierten elastomeren Materials der Matrix entspricht. Somit ist es möglich, einen Bodenbelag bereitzustellen, der vollflächig über vergleichbare Eigenschaften verfügt. Ein transparent ausgebildeter vulkanisierbarer elastomerer Werkstoff weist dagegen stets eine geringere Härte als auf, so dass der Bodenbelag nicht über durchgehend gleichmäßige Eigenschaften verfügt.

Der transparent ausgeführte thermoplastische Werkstoff kann ferner mit Effektpigmenten versehen sein. Effektpigmente verleihen dem Bodenbelag winkelabhängige Farbton- oder Glanzänderungen. Diese bestehen meist aus metallischen Partikeln mit bestimmten optischen Eigenschaften. Die Wirkung dieser Effektpigmente tritt bei transparenten Werkstoffen besonders deutlich hervor, wobei die Pigmente in der Matrix des transparenten thermoplastischen Werkstoffs besonders sicher eingebunden sind.

Das elastomere Material der Matrix kann aus einem thermoplastischen Elastomer oder aus einem Kautschuk gebildet sein. Bodenbeläge aus derartigen Werkstoffen weisen vorteilhafte Gebrauchseigenschaften wie Rutschsicherheit, Trittschalldämpfung und geringe elektrostatische Aufladung auf. Des Weiteren können die Polymere derart gewählt werden, dass der Bodenbelag zudem ein vorteilhaftes, insbesondere emissionsarmes Brandverhalten aufweist. Vorteilhafte Werkstoffe für die Matrix des Bodenbelags sind Nitril-Butadien-Kautschuk (NBR), Styrol-Butadien-Kautschuk (SBR), Butadien-Kautschuk (BR), Ethylen-Propylen-Dien-Kautschuk (EPDM), Naturkautschuk (NR) und Isopren-Kautschuk (IR).

Die Partikel können aus Halbzeugen gebildet sein. Dazu wird das thermoplastische Elastomer vor dem Einmischen in die Matrix einem Formgebungsprozess unterworfen. Vorteilhafte Formgebungsprozesse sind das Spritzgießen und die Extrusion. Bei diesen Verfahren können Partikel in einer großen Formenvielfalt bereitgestellt werden. Denkbare Formen sind Zylinderabschnitte mit rundem, kreisringförmigem, sternförmigem oder ovalem Querschnitt. Zur Herstellung der Partikel werden mittels Spritzgießen Freiformen hergestellt oder mittels Extrusion ein Strangprofil hergestellt, welches anschließend auf die gewünschte Länge zugeschnitten werden kann. Vorzugsweise werden die so hergestellten Partikel einer Vernetzung mittels ionisierender Strahlung unterzogen, so dass diese während der Weiterverarbeitung in der Matrix ihre Form beibehalten.

Das elastomere Material der Matrix und das thermoplastische Elastomer der Partikel weisen vorzugsweise jeweils wenigstens ein übereinstimmendes Monomer auf. Die identischen Monomere der beiden Komponenten weisen zueinander gute Hafteigenschaften auf, so dass sich eine besonders gute Haftung der Partikel in der Matrix ergibt. Die Haftung kann bei Verwendung eines Haftvermittlers nochmals verbessert werden. Vorteilhafte Materialkombinationen sind Styrol beinhaltende TPE, wobei das elastomere Material der Matrix ebenfalls Styrol enthält und Butadien beinhaltende TPE, wobei das elastomere Material der Matrix ebenfalls Butadien enthält. Styrol beinhaltende TPE sind beispielsweise Styrol-Butadien-Block-Copolymer (SBS), hydriertes Styrol-Butadien-Block-Copolymer (SEBS), Styrol-Isopren-Block-Copolymer (SIS), hydriertes Styrol-Isopren-Block-Copolymer (SEBS). Dabei weist das SBS und das SEBS sowohl ein Styrol-Monomer als auch zumindest teilweise Butadien-Monomere auf. Partikel aus diesen TPE eignen sich somit auch vorteilhaft zur Verwendung in einer Matrix welche Butadien-Monomere enthält.

Bei Verwendung eines thermoplastischen Elastomers sollten die Werkstoffe der Matrix und der Partikel vorzugsweise derart aufeinander abgestimmt sein, dass diese ebenfalls übereinstimmende oder zumindest chemisch ähnliche Monomere aufweisen, um eine bestmögliche Verträglichkeit der Werkstoffe untereinander zu erzielen.

Bei dem erfindungsgemäßen Verfahren zur Herstellung eines Bodenbelags werden zunächst Partikel aus einem thermoplastischen Elastomer hergestellt und anschließend mit ionisierender Strahlung behandelt und die so vorbehandelten Partikel werden in ein elastomeres Material eingemischt, welches anschließend zu einer bahn- oder plattenförmigen Matrix weiterverarbeitet wird. Durch die ionisierende Strahlung erfolgt eine wenigstens teilweise Vernetzung des thermoplastischen Elastomers. Die so vorbehandelten Partikel sind auch bei einer Temperatureinwirkung bis größer 160°C und einem Druck von bis zu 200 bar formstabil. Dadurch behalten die der Matrix beigemischten Partikel auch bei den zur Herstellung eines Bodenbelags typischen Verfahrensschritten, die sowohl mechanische Prozessen wie Mischen, Kalandrieren und Extrudieren als auch Wärmebehandlungen wie Vorwärmen und Vulkanisieren umfassen, ihre Form bei. Dadurch lassen sich gemusterte Bodenbeläge herstellen, wobei das Muster des Bodenbelags durch die Formgebung der Partikel vorgegeben ist.

Die Behandlung mit ionisierenden Strahlen kann die Bestrahlung mit β- und/oder γ-Strahlen umfassen. Diese Strahlen sind besonders energiereich und dringen tief in den Werkstoff ein. Als vorteilhaft hat sich eine Strahlenbehandlung mit einer Strahlendosis von mindestens 150 kGy erwiesen. Eine derartige Strahlendosis bewirkt eine signifikante Vernetzung. Die Behandlung erfolgt ohne Einwirkung von Druck oder Temperatur.

Die Partikel können aus einem Halbzeug gebildet werden. Die Herstellung des Halbzeugs kann mit den üblichen aus der Verarbeitung der thermoplastischen Werkstoffe bekannten Verfahren wie Spritzgießen oder Extrudieren erfolgen. Diese werden anschließend gegebenenfalls zugeschnitten und mittels Strahlenbehandlung vernetzt. Die zuvor genannten Verfahren ermöglichen die Herstellung von Halbzeugen in einer großen Formenvielfalt, so dass ein Bodenbelag mit unterschiedlichsten Mustern hergestellt werden kann.

Einige Ausführungsbeispiele des erfindungsgemäßen Bodenbelags werden nachfolgend näher erläutert.

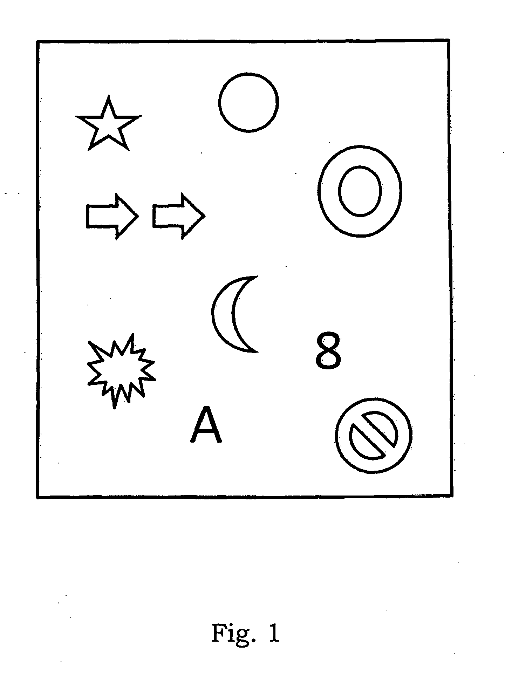

Figur 1 zeigt beispielhaft einen Bodenbelag mit einer Matrix aus elastomerem Material, welche mit Partikeln aus vernetztem thermoplastischem Elastomer versehen ist. Die Partikel sind aus Halbzeugen hergestellt und in einer großen Formenvielfalt verfügbar. Die Figur zeigt lediglich beispielhaft einen Bodenbelag mit Partikeln mit kreisförmigem, ringförmigem, halbmondförmigem und sternförmigem Querschnitt. Die Partikel können sich farblich von der Matrix unterscheiden oder auch transparent ausgestaltet sein, so dass der Bodenbelag partiell durchleuchtet.

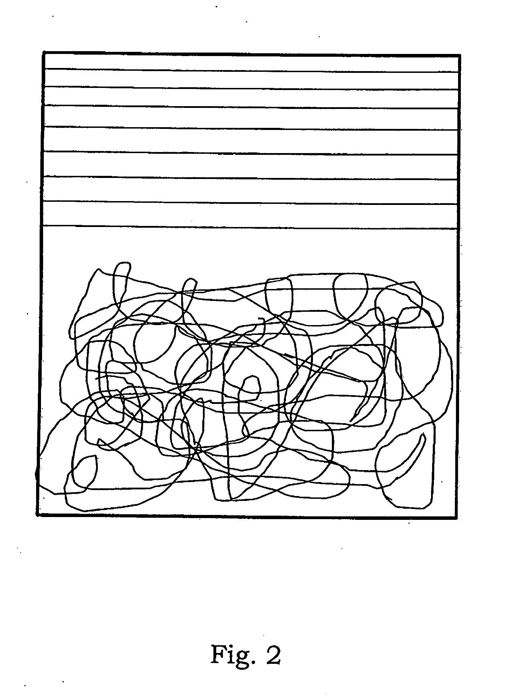

Figur 2 zeigt beispielhaft einen Bodenbelag gemäß Figur 1, wobei die Partikel in dieser Ausgestaltung als Bänder und Schnüre ausgebildet sind. Die Figur 2 zeigt ferner die Anordnung der Partikel in Streifenform und als unwillkürliches Spaghettimuster.

### Beispiel 1

Der Bodenbelag besteht aus einer plattenförmigen Matrix aus elastomerem Material, in dieser Ausgestaltung aus Styrol-Butadien-Kautschuk (SBR). Die Matrix ist mit transparenten Partikeln aus einem thermoplastischen Elastomer versehen, in dieser Ausgestaltung Styrol-Butadien-Block-Copolymer (SBS). Zur Herstellung der Partikel wurde zunächst mittels Extrusion ein Strangprofil als Halbzeug hergestellt, welches anschließend zugeschnitten wurde. Dadurch entstanden Partikel mit vorgegebenem Profil in vorgegebener Länge. Diese Partikel wurden einer ionisierenden γ-Strahlenquelle bei einer Strahlendosis von 150 kGy ausgesetzt, wodurch eine Vernetzung des thermoplastischen Elastomers erfolgte. Die so vernetzten Partikel wurden dem elastomeren Material zugegeben, anschließend wurde das elastomere Material mit den Partikeln gemischt, mittels Kalander zu einer Bahn geformt und zur Vulkanisation des SBR einer Wärmebehandlung bei 160°C unterworfen. Während des Mischvorgangs erfolgte in der Rohmasse enthaltend das elastomere Material und den thermoplastischen Elastomer ein hoher Energieeintrag im Bereich von 4 kW/kg Mischung. Dieser mechanische Energieeintrag wird durch starke Scherbeanspruchung letztendlich in Wärme gewandelt, wobei die Partikel stabil bleiben. Vorteilhafte Wirkung des Mischungsvorgangs ist die besonders homogene Verteilung der Partikel in der Matrix und damit besonders homogene Materialeigenschaften des Bodenbelags. Während dieser mechanischen und thermischen Behandlung sind die Partikel formstabil geblieben. Durch das übereinstimmende Monomer Styrol sind die Partikel fest in die Matrix des Bodenbelags eingebunden. Dabei ragen die Partikel bis an die Oberfläche des Bodenbelags, so dass die Partikel ein vorgegebenes Muster auf dem Bodenbelag bilden.

### Beispiel 2

Der in Beispiel 1 beschriebene Bodenbelag wird nach dem Mischen zu einer Bahn in doppelter Schichtdicke geformt und anschließend mittels Rundlaufmesser in zwei Bahnen gleicher Stärke gespalten. Nach dem Verlegen bilden die durch das Spalten entstandenen Oberflächen die dem Boden abgewandten Seiten. Durch das Spalten treten die Partikel an der neu geschaffenen Oberfläche deutlich hervor, dies ist insbesondere dann vorteilhaft, wenn die Partikel an den Oberflächen der ungespaltenen Bahn aufgrund eines Überfließens des Materials der Matrix während des Kalandrierens wenigstens teilweise bedeckt sind. Insbesondere bei Verwendung transparenter Partikel tritt der durchscheinende Effekt der Partikel besonders deutlich hervor. Diese Wirkung kann durch Schleifen der beiden Rückseiten des Bodenbelags noch einmal verbessert werden.

Durch ein Bodenbelagssystem, umfassend einen erfindungsgemäßen Bodenbelag mit transparenten Partikeln und einem durchscheinenden Klebstoff, vorzugsweise einem Acrylatkleber, insbesondere einem Cyanacrylat-Klebstoff ergibt sich in Zusammenhang mit einer bodenseitigen, also rückseitigen Beleuchtung eine besonders effektvolle Wirkung.

### Beispiel 3

Der Bodenbelag besteht aus einer plattenförmigen Matrix aus elastomerem Material, in dieser Ausgestaltung aus Nitril-Butadien-Kautschuk (NBR). Die Matrix ist mit verschiedenfarbigen Partikeln aus einem thermoplastischen Elastomer versehen, in dieser Ausgestaltung Styrol-Butadien-Block-Copolymer (SBS). Zur Herstellung der Partikel wurde zunächst mittels Extrusion eine flächige Ware als Halbzeug hergestellt, welche anschließend zu Partikeln geschreddert wurde. Diese Partikel wurden einer ionisierenden γ-Strahlenquelle bei einer Strahlendosis von 150 kGy ausgesetzt, wodurch eine Vernetzung des thermoplastischen Elastomers erfolgte. Zur Herstellung der Matrix wurde das elastomere Material gemischt und mittels Kalander zu einer Bahn geformt. Auf die so erzeugte Bahn wurden die Partikel aufgestreut und die Bahn mit den aufgestreuten Partikeln wurde anschließend vulkanisiert. Bei dem Aufstreuen ist vorteilhaft, dass für eine effektvolle Oberfläche verhältnismäßig wenig Partikel benötigt werden. Anschließend wurde die Bahn zur Vulkanisation des SBR einer Wärmebehandlung bei 160°C unterworfen. Während dieser mechanischen und thermischen Behandlung sind die Partikel formstabil geblieben. Durch das übereinstimmende Monomer Styrol sind die Partikel fest in die Matrix des Bodenbelags eingebunden. Dabei ragen die Partikel bis an die Oberfläche des Bodenbelags, so dass die Partikel ein vorgegebenes Muster auf dem Bodenbelag bilden.

Die folgende Tabelle zeigt erfindungsgemäße Materialkombinationen elastomerer Materialien und thermoplastischer Elastomere zur Herstellung eines erfindungsgemäßen Bodenbelags:

| Nitril-Butadien-Kautschuk (NBR) | SBS (Styrol-Butadien-Block-Copolymer) |
|---|---|
| Styrol-Butadien-Kautschuk (SBR) | SBS |
| SBR | SEBS (SBS hydriert) |
| SBR | SIS (Styrol-Isopren-Block-Copolymer) |
| SBR | SEBS |
| Butadien-Kautschuk (BR) | SBS |
| Ethylen-Propylen-Dien-Kautschuk (EPDM) | SEBS |
| Naturkautschuk (NR) | SIS |
| Isopren-Kautschuk (IR) | SIS |

Erfindungsgemäße Materialkombinationen bei Wahl einer Matrix aus thermoplastischem Elastomer weisen ebenfalls vorzugsweise übereinstimmende Monomere auf.

## Patentansprüche

1. Bodenbelag, umfassend eine im Wesentlichen bahn- oder plattenförmige Matrix aus einem elastomeren Material, wobei die Matrix mit Partikeln versehen ist, **dadurch gekennzeichnet, dass** die Partikel aus einem thermoplastischen Elastomer gebildet sind und dass die Partikel mittels ionisierender Strahlung vorbehandelt sind.

2. Bodenbelag nach Anspruch 1, **dadurch gekennzeichnet, dass** das elastomere Material der Matrix aus einem thermoplastischen Elastomer oder aus einem Kautschuk gebildet ist.

3. Bodenbelag nach einem der Ansprüche 1 oder 2, **dadurch gekennzeichnet, dass** die Partikel aus Halbzeugen gebildet sind.

4. Bodenbelag nach einem der Ansprüche 1 bis 3, **dadurch gekennzeichnet, dass** die Partikel zumindest teilweise transparent ausgebildet sind.

5. Bodenbelag nach einem der Ansprüche 1 bis 4, **dadurch gekennzeichnet, dass** das elastomere Material der Matrix und das thermoplastische Elastomer der Partikel jeweils wenigstens ein übereinstimmendes Monomer aufweisen.

6. Bodenbelagssystem, umfassend einen Bodenbelag nach einem der vorherigen Ansprüche, wobei die Partikel insbesondere wenigstens teilweise transparent ausgebildet sind, wobei der Bodenbelag mit einem durchscheinenden Klebstoff, vorzugsweise einem Acrylatkleber, auf einen Boden aufklebbar ist. welches anschließend zu einer bahn- oder plattenförmigen Matrix weiterverarbeitet wird.

7. Verfahren zur Herstellung eines Bodenbelags nach einem der vorherigen Ansprüche, wobei zunächst Partikel aus einem thermoplastischen Elastomer hergestellt und anschließend mit ionisierender Strahlung behandelt werden und die so vorbehandelten Partikel in ein elastomeres Material eingemischt werden,

8. Verfahren nach Anspruch 7, **dadurch gekennzeichnet, dass** die Behandlung der Partikel mit ionisierenden Strahlen derart erfolgt, dass die Partikel bei der Weiterverarbeitung mit dem elastomeren Material zu einem Bodenbelag formstabil bleiben.

9. Verfahren nach Anspruch 7 oder 8, **dadurch gekennzeichnet, dass** die Behandlung mit ionisierenden Strahlen die Bestrahlung mit β- und/oder γ-Strahlen umfasst.

10. Verfahren nach einem der Ansprüche 7 bis 9, **dadurch gekennzeichnet, dass** die Weiterverarbeitung mechanische Formgebungsprozesse und/oder eine Wärmebehandlung umfasst.

11. Verfahren nach einem der Ansprüche 7 bis 10, **dadurch gekennzeichnet, dass** die Partikel aus einem Halbzeug gebildet werden.

## Claims

1. Floor covering comprising a matrix that essentially has a form of a web or of a sheet and that is made of an elastomeric material, wherein the matrix comprises particles, **characterized in that** the particles are composed of a thermoplastic elastomer and that the particles have been pre-treated with ionizing radiation.

2. Floor covering according to Claim 1, **characterized in that** the elastomeric material of the matrix is composed of a thermoplastic elastomer or of a rubber.

3. Floor covering according to Claim 1 or 2, **characterized in that** the particles are composed of semifinished products.

4. Floor covering according to any of Claims 1 to 3, **characterized in that** the particles are at least partially transparent.

5. Floor covering according to any of Claims 1 to 4, **characterized in that** the elastomeric material of the matrix and the thermoplastic elastomer of the particles respectively have at least one identical monomer.

6. Floor covering system comprising a floor covering according to any of the preceding claims, where the particles in particular are at least partially transparent, where the floor covering can be adhesively bonded to a floor by a translucent adhesive, preferably an acrylate adhesive.

7. Process for the production of a floor covering according to any of the preceding claims, where particles made of a thermoplastic elastomer are first produced and then are treated with ionizing radiation and the particles thus pre-treated are mixed into an elastomeric material which is then further processed to give a matrix that takes the form of a web or of a sheet.

8. Process according to Claim 7, **characterized in that** the treatment of the particles with ionizing radiation takes place in a manner such that the particles remain dimensionally stable during the further processing with the elastomeric material to give a floor covering.

9. Process according to Claim 7 or 8, **characterized in that** the treatment with ionizing radiation comprises β- and/or γ-radiation.

10. Process according to any of Claims 7 to 9, **characterized in that** the further processing comprises mechanical shaping processes and/or heat treatment.

11. Process according to any of Claims 7 to 10, **characterized in that** the particles are formed from a semifinished product.

## Revendications

1. Revêtement de sol, comprenant une matrice essentiellement en forme de bande ou de plaque en un matériau élastomère, la matrice étant munie de particules, **caractérisé en ce que** les particules sont formées en un élastomère thermoplastique et **en ce que** les particules sont prétraitées par un rayonnement ionisant.

2. Revêtement de sol selon la revendication 1, **caractérisé en ce que** le matériau élastomère de la matrice est formé à partir d'un élastomère thermoplastique ou d'un caoutchouc.

3. Revêtement de sol selon l'une quelconque des revendications 1 ou 2, **caractérisé en ce que** les particules sont formées à partir de produits semi-finis.

4. Revêtement de sol selon l'une quelconque des revendications 1 à 3, **caractérisé en ce que** les particules sont au moins partiellement transparentes.

5. Revêtement de sol selon l'une quelconque des revendications 1 à 4, **caractérisé en ce que** le matériau élastomère de la matrice et l'élastomère thermoplastique des particules comprennent chacun au moins un monomère concordant.

6. Système de revêtement de sol, comprenant un revêtement de sol selon l'une quelconque des revendications précédentes, dans lequel les particules sont notamment au moins partiellement transparentes, le revêtement de sol pouvant être collé sur un sol avec une colle translucide, de préférence une colle acrylate.

7. Procédé de fabrication d'un revêtement de sol selon l'une quelconque des revendications précédentes, selon lequel des particules en un élastomère thermoplastique sont tout d'abord fabriquées, puis traitées avec un rayonnement ionisant, et les particules ainsi traitées sont incorporées dans un matériau élastomère, qui est ensuite transformé en une matrice en forme de bande ou de plaque.

8. Procédé selon la revendication 7, **caractérisé en ce que** le traitement des particules avec des rayonnements ionisants a lieu de manière à ce que les particules maintiennent une forme stable pendant la transformation avec le matériau élastomère en un revêtement de sol.

9. Procédé selon la revendication 7 ou 8, **caractérisé en ce que** le traitement avec des rayonnements ionisants comprend l'exposition à des rayonnements β et/ou γ.

10. Procédé selon l'une quelconque des revendications 7 à 9, **caractérisé en ce que** la transformation comprend des processus de façonnage mécaniques et/ou un traitement thermique.

11. Procédé selon l'une quelconque des revendications 7 à 10, **caractérisé en ce que** les particules sont formées à partir d'un produit semi-fini.
